# EUROPEAN PATENT APPLICATION

(11) **EP 2 295 837 A1**
(43) Date of publication of application: **16.03.2011**
(21) Application number: 10164135.5
(22) Date of filing: 27.05.2010
(51) Int. Cl.: F16K 5/06, G01K 1/14, F16K 37/00

(54) **Shut off valve with thermometer**

(30) Priority: 09.09.2009 IT BS20090164
(71) Applicant: Tiemme Raccorderie S.p.A., 25045 Castegnato (Brescia) (IT)
(72) Inventor: GNUTTI, Giuliano, I-25121, BRESCIA (IT)
(74) Representative: Pulieri, Gianluca Antonio

(57) **Abstract**

An intercepting valve (1) comprises a valve body (2) having an inner chamber (3), an obturator (8) and a seat (20) on the valve body, outside the chamber (3), for a thermometer. The seat of the thermometer is separate from the obturator compartment.

## Description

The present invention relates to an intercepting valve of a fluid, and in particular to an intercepting valve fitted with a thermometer to measure the temperature of a fluid.

Intercepting valves are known of in the prior art which are provided with a seat, which a probe for measuring the temperature is inserted in, crossing the wall of the valve body and coming into contact with the fluid to send a signal to a temperature visualisation device.

Further known solutions envisage the use of thermocouples, inserted inside ducts which holes are made in for the passage of electric cables, and sophisticated infrared and wireless systems.

However all of these systems have a number of drawbacks.

For example, the probes inserted in the ducts in a more or less invasive manner may negatively influence the movement of the fluid, changing its state, triggering turbulence or cavitation phenomena.

In addition, such probes, in the same way as the thermocouples, require apertures in the ducts which cause leaks of fluid.

The infrared and wireless solutions have the disadvantage of being extremely expensive, thereby unlikely to enjoy a large scale distribution.

Besides all this, it is difficult for the measurement systems mentioned to measure the temperature at the valve, being suited rather to measuring it in the ducts upstream or downstream of the same.

Among the requirements which such valves must satisfy is the need for reliable measurement without a significant increase in production costs, so as to permit use on a wider scale.

The purpose of the invention is to overcome the drawbacks of the prior art and satisfy the aforesaid requirements.

The characteristics and advantages of the invention will be evident from the description given below, made by way of a non-limiting example with reference to the attached drawings, wherein:
- figure 1 shows a perspective view of an intercepting valve according to the invention, according to one embodiment;
- figure 2 shows a longitudinal cross-section of the valve in figure 1;
- figure 3 shows a perspective view of the intercepting valve according to the invention, according to a further embodiment;
- figure 4a shows a longitudinal cross-section of the valve in figure 3; and
- figure 4b shows a longitudinal cross-section of the valve in figure 3 with thermometer.

With reference to the attached drawings, reference numeral 1 globally denotes an intercepting valve according to the present invention.

The valve 1 comprises a valve body 2 preferably made in one piece, for example by forging, usually in a metal material such as brass or steel.

The valve body 2 has an inner chamber 3 which makes it hollow; the valve body 2 also has an inlet 4 and an outlet 6 for the entrance and exit of the fluid through the chamber 3.

The valve 1 comprises, in addition, an obturator 8, housed in the valve body 2, between the inlet 4 and the outlet 6. The obturator 8 is movable between a closed configuration in which it prevents the transit of fluid between the inlet and the outlet, and an open configuration, wherein transit is allowed.

In particular, the obturator 8 is in the form of a perforated sphere and can be rotated, manually or automatically, around a rotation axis Z, from an open configuration to a closed configuration and vice versa.

Preferably, the valve 1 comprises, in addition, sealing means 10, positioned between the obturator and the walls of the inner chamber 3 to form a watertight seal.

Preferably, the valve 1 comprises manually activated control devices, outside the valve body, to move the obturator.

For example, the control devices comprise a grip 12, for example a knob or lever, mechanically connected to the obturator 8 to enable rotation of the same.

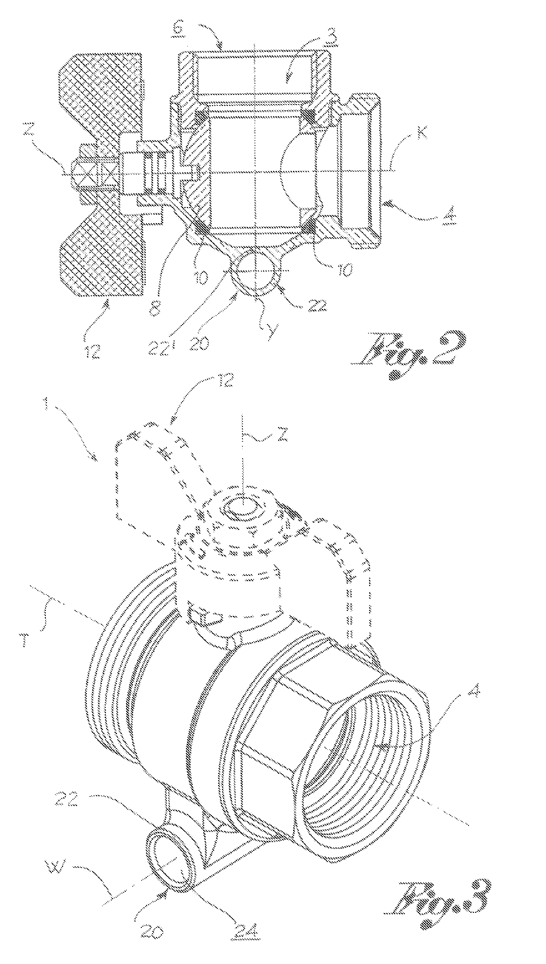

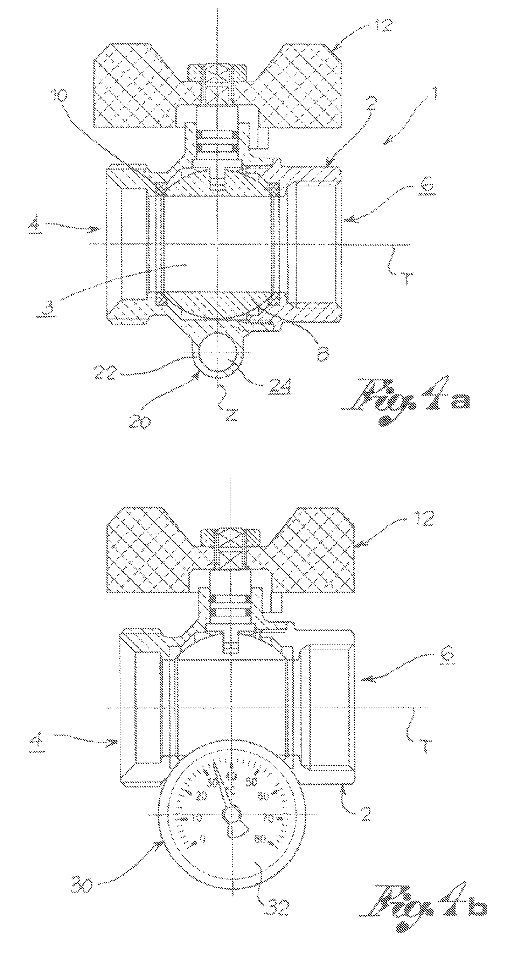

According to one embodiment, a direction of transit T of the fluid is defined perpendicular to the rotation axis Z; the inlet 4 and the outlet 6 are aligned in the direction of transit T; in such embodiment the valve is therefore "rectilinear"" (figures 3, 4a and 4b).

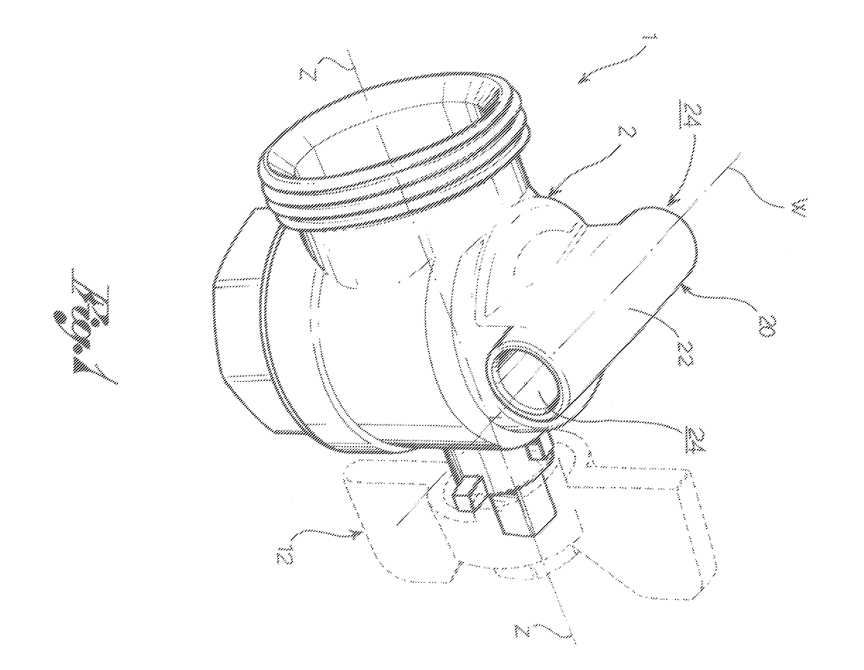

In a further embodiment, an exit direction Y of the fluid is defined perpendicular to the rotation axis Z; the outlet 6 is positioned along the exit direction Y; an entrance direction K is also defined, incident to the exit direction Y, for example perpendicular to it; the inlet 4 is positioned along the entrance direction K in such embodiment, the valve thus being "L-shaped" (figures 1 and 2).

The valve body 2 comprises in addition a seat 20, outside the inner chamber 3, able to house a thermometer 30; in other words, the seat 20 is fluidically separate from the inner chamber 3; in other words again, a wall divides the seat 20 from the chamber 3, so that there is no continuity.

According to a preferred embodiment, the thermometer 30 comprises a sensitive pin and a display device 32 to show the temperature.

The sensitive pin of the thermometer 30 can be inserted in the seat 20 to connect the thermometer to the valve body; the sensitive pin can, in addition, preferably, be unthreaded from the seat 20, to separate the thermometer from the valve body. Preferably, in addition, the sensitive pin can be rotated in the seat 20 to rotate the display device 32 to the desired position.

Since the seat 20 is separate from the chamber 3, the sensitive pin is not struck by the fluid; however the transit of the fluid in the valve body makes its temperature, measured by the thermometer, reach the temperature of the fluid as a result of conduction phenomena.

Preferably, the seat 20 is cylindrical.

Preferably, the seat 20 is defined by a tubular wall 22 which extends along a rectilinear seat axis W, between two opposite apertures 24. This way, the thermometer can be positioned on one or other side of the seat, depending on viewing requirements. The valve can therefore be fitted reversibly.

In particular, the tubular wall 22 comprises a separation portion 22',that is a portion of wall separating the chamber 3 holding the obturator from the seat 20 holding the thermometer.

The separation portion 22' is preferably in one piece with the remaining part of the tubular wall 22 and is made in the same heat conductive material so that even though the sensitive pin is not directly struck by the fluid, the contact of the fluid with the separation portion 22' means that, as a result of conduction phenomena, the thermometer can measure the temperature.

In one embodiment, the seat 20 is positioned on the opposite side to the knob 12 in relation to the inner chamber 3 of the valve body 2 (figure 3).

For example, the seat axis W lies on an imaginary plane perpendicular to the rotation axis Z of the obturator.

In a further embodiment, the seat 20 is positioned on the side opposite the outlet 6 of the valve body 2 in relation to the obturator 8 (figure 1); for example, the seat axis W lies on a plane perpendicular to the outlet axis Y.

In yet a further embodiment, the seat 20 is positioned on the side opposite the inlet 4 of the valve body 2 in relation to the obturator 8; for example, the seat axis W lies on a plane perpendicular to the inlet axis K.

Innovatively, the intercepting valve described above makes it possible to obtain a precise indication of the temperature of the fluid for uses of the valve, especially in the domestic sphere.

Advantageously, the current of fluid is not disturbed by the presence of the thermometer and leaks and losses of head are prevented.

The valve according to the invention, in addition, is particularly cheap to produce.

Advantageously, in addition, the valve according to the invention enables optimal positioning of the viewing device, making reading of the same easier, even in small spaces.

Advantageously, in addition, the valve is reversible, in the sense that the thermometer can be positioned on one or other side of the valve body.

Advantageously, the thermometer is located close to the fluid current.

It is clear that a person skilled in the art may make variations to the intercepting valve described above so as to satisfy contingent requirements while remaining within the sphere of protection as defined by the following claims.

## Claims

1. Intercepting valve (1) comprising:
- a valve body (2) having an inner chamber (3) with an inlet (4) and an outlet (6) for the transit of fluid;
- an obturator (8) housed in the chamber (3) of the valve body, movable between a closed configuration and an open configuration to obstruct/allow the transit of fluid from the inlet to the outlet;
- a thermometer (30) applied to the valve body (2) to show the temperature of the fluid,
wherein the valve body (2) comprises a seat wall (22) which defines a seat (20) to hold the thermometer (30), said valve being **characterised by** the fact that the seat for the thermometer is separated from the chamber (3) of the obturator.

2. Valve according to claim 1, wherein the seat (20) extends along a rectilinear seat axis (W) between two seat apertures (24) to hold the thermometer at one end or the other.

3. Valve according to any of the claims 1 or 2, wherein the thermometer (30) comprises a sensitive pin and a temperature display device (32) said sensitive pin being suitable for inserting in the seat (20).

4. Valve according to claim 3, wherein the sensitive pin can be unthreaded from the seat (20).

5. Valve according to claim 2 and according to claim 3 or 4 wherein
- the obturator (8) can be turned from the closed to the open configuration around a rotation axis (Z); and
- the seat axis (W) lies on a plane perpendicular to the rotation axis (Z).

6. Valve according to any of the previous claims, wherein the obturator (8) can be turned from the closed to the open configuration around a rotation axis (Z).

7. Valve according to any of the previous claims, wherein the valve body (2) is one piece made by forging.

8. Valve according to any of the previous claims, comprising a knob or lever (12) to turn the obturator.

9. Valve according to claim 8, wherein the seat (20) is positioned on the side opposite the knob (12) in relation to the obturator.

10. Valve according to claim 8, wherein the seat (20) is positioned on the side opposite the outlet (6) in relation to the obturator.

11. Valve according to claim 8, wherein the seat (20) is positioned on the side opposite the inlet (4) in relation to the obturator.

12. Valve according to any of the previous claims, wherein the valve body is rectilinear.

13. Valve according to any of the claims from 1 to 11, wherein the valve body is L-shaped.
